# EUROPEAN PATENT APPLICATION

(11) **EP 1 251 662 A1**
(43) Date of publication of application: **23.10.2002**
(21) Application number: 01108290.6
(22) Date of filing: 02.04.2001
(51) Int. Cl.: H04L 12/56, H04L 12/44

(54) **Method for communicating between fibre channel systems**

(71) Applicant: Sancastle Technologies Ltd., Yokneam (IL)
(72) Inventor: Czeiger, Moshe, Haifa 26341 (IL); Bruchian, Goel, Kiryat Ata 28000 (IL)
(74) Representative: Stellinger, Jens-Holger

(57) **Abstract**

Apparatus for transferring data between first and second networks (12, 24), each operating according to a Fibre Channel (FC) protocol, via a central network (18) which operates according to a different protocol. The apparatus consists of a first interface (14A) between the first network and the central network, and a second interface (14B) between the second network and the central network. Each interface has a memory (20A, 20B) containing a look-up table, and each interface is adapted to receive an FC data-frame from a client (13, 25) on its FC network. The data-frame is converted, using the table, to a data-frame compatible with the central network. The first interface receives an FC data-frame and converts the data-frame to one compatible with the central network. The converted data-frame is transmitted via the central network to the second interface, wherein the FC data-frame is recovered and transmitted within the second FC network.

## Description

### FIELD OF THE INVENTION

The present invention relates generally to data transmission networks, and specifically to coupling separated networks together.

### BACKGROUND OF THE INVENTION

Methods for transferring data within networks, such as local area networks (LANs) and storage area networks (SANs), rely on standard protocols describing how the data are transferred. Typically the data for a specific network are transferred as data-frames having a format defined by the protocol governing the functioning of the network. Two protocols which are used for transferring data at gigabit/s (Gbps) rates are the IEEE 802.3(Z) Ethernet protocol, issued by the Institute of Electrical and Electronics Engineers, Inc., New Jersey, and the FC-PH Fibre Channel protocol, issued by the American National Standards Institute, Washington, D. C.

Extending a network such as a Fibre Channel (FC) network by coupling it to other like networks is typically performed by coupling the networks together using one or more private lines.

Methods for transferring data between networks operating under different protocols operating at Gbps rates are known in the art. For example, Dell Computer Corporation of Round Rock, Texas, provides a PowerVault Fibre Channel family of products which may be configured to transfer data between a Fibre Channel network and a gigabit Ethernet (GBE) network. Data transfer between the networks requires a suitably-adapted server.

### SUMMARY OF THE INVENTION

It is an object of some aspects of the present invention to provide a system for coupling separate data transmission networks to form a wide area network.

It is a further object of some aspects of the present invention to provide a system for coupling separate data transmission networks in a manner substantially transparent to clients of the networks.

In preferred embodiments of the present invention, a plurality of networks which are separate from each other are coupled together via a central distributed wide area network (WAN). Each of the separate networks preferably operates according to a Fibre Channel (FC) protocol. These networks are herein termed FC networks, "FC islands," or "islands." The central WAN and the islands most preferably transfer data at a rate of the order of 1 gigabits/s (Gbps). The central WAN supports data transfer in the form of Internet Protocol (IP) frames, and communicates with the FC islands according to an Ethernet protocol, most preferably a gigabit Ethernet (GBE) protocol. Data is transferred between the islands and the WAN by encapsulating an FC data-frame as an IP frame with an Ethernet header, so forming an Ethernet/IP data-frame. Each island is coupled to the central WAN via a respective interface which converts data between Ethernet/IP and FC protocols. Thus, a client of one of the islands is able to communicate with a client of another of the islands using the FC protocol, so that the separate FC islands appear as one FC network to clients of the islands despite the intervening Ethernet/IP link, averting the need for one or more private lines as is used in the art.

Each interface comprises a memory, containing a look-up table, which is controlled by a dedicated central processing unit (CPU). The interface is implemented using industry-standard devices and/or one or more custom or semi-custom devices, such as application specific integrated circuits (ASICs). Most preferably, the interface for each FC island is implemented as a component within a switch coupling clients of the island. Further preferably, the switch comprises the dedicated CPU. When interfaces are implemented using dedicated components and/or ASICs, data transfer between FC islands is significantly faster than data transfer using a server.

In preferred embodiments of the present invention, a transmitting client, herein termed the transmitter, comprised in a first FC island, sends data in the form of an FC data-frame to a receiving client, herein termed the receiver, comprised in a second FC island. The FC data-frame is received by the interface to the central network in the first FC island, which converts the data-frame to one or more Ethernet/IP data-frames addressed to the interface in the second FC island. If data-frame size restrictions within the central WAN necessitate, the FC data-frame is fragmented into a plurality of ordered, encapsulated Ethernet/IP data-frames by the interface of the first island. The interface stores a temporary copy of the one or more Ethernet/IP data-frames in a buffer comprised in the interface. The interface also stores respective pointers to the one or more Ethernet/IP data-frames, and transmits the Ethernet/IP data-frames via the central network to the interface of the second island.

The interface of the second island sends an acknowledgment of correct reception of each Ethernet/IP data-frame to the interface of the first island, which checks each acknowledgment against the buffer. When there is more than one Ethernet data-frame, the interface of the second island also arranges the received data-frames in order. If one of the acknowledgments is not received by the interface of the first island, the interface resends the data. The interface of the second island checks whether it has already received the resent data, and if it has, it ignores the resent data. Once the interface of the second island has received all the Ethernet/IP data-frames formed from the FC data-frame, it reconstructs the FC data-frame and forwards it to the receiver in its island. Neither the FC transmitter nor the FC receiver is aware of the intermediate conversion to an Ethernet protocol, so that the data transmission is effectively transparent to both The process of resending unacknowledged data, and ignoring the resent data if has already been received, improves the reliability of data communication over FC communication systems known in the art.

In preferred embodiments of the present invention, Ethernet/IP data-frames are configured so as to optimize their length. Each data-frame is set to be less than or equal to a maximum length allowed by the Ethernet protocol, or to a maximum length allowed by a router or other active element within the central network. By reconfiguring data-frame length as necessary, an overall rate of data transmission is improved. Furthermore, Ethernet/IP data-frames produced in an interface can be routed according to a specific, selected path, i.e., via one or more specific routers comprised within the central WAN. By routing data-frames according to a specific path, the reliability and/or security and/or speed of data transmission is improved.

There is therefore provided, according to a preferred embodiment of the present invention, apparatus for transferring data between first and second networks via a central network therebetween, including:
a first interface coupled between the first network, which operates according to a Fibre Channel protocol, and the central network, which operates according to a protocol different from the Fibre Channel protocol, the first interface comprising a memory containing a look-up table that includes a second-network-destination-address, and being adapted to receive from a client on the first network an initial data-frame comprising the second-network-destination-address, and to derive a second-interface-address from the look-up table using the second-network-destination-address as an index to the table, and to concatenate the second-interface-address to the initial data-frame so as to form a concatenated data-frame, and to convert the concatenated data-frame to a plurality of sub-frames responsive to a length of the concatenated data-frame, each sub-frame comprising a respective counter, and to convey the plurality of sub-frames to the central network for delivery to the second-interface-address; and
a second interface coupled between the central network and the second network, which operates according to the Fibre Channel protocol, the second interface being adapted to receive the plurality of sub-frames at the second-interface-address, and to convey a respective acknowledgment of receipt of each of the plurality of sub-frames to the first interface, and to recover the initial data-frame from the plurality of sub-frames responsive to the respective counters, and to convey the recovered data-frame to the second network for delivery to the second-network-destination address;

wherein the first interface is adapted to resend one or more of the plurality of sub-frames to the second interface responsive to not receiving the acknowledgment of the respective sub-frame, and wherein the second interface is adapted to check if a resent sub-frame has already been received therein, and responsive thereto, to ignore the resent sub-frame.

Preferably, the second interface includes a second-interface memory containing a second-interface look-up table that includes a first-network-destination-address, the second interface being adapted to receive from a second-network client on the second network a second-network initial data-frame including the first-network-destination-address, and to derive a first-interface-address from the second-interface look-up table using the first-network-destination-address as an index to the second-interface look-up table, and to concatenate the first-interface-address to the second-network initial data-frame to form a second-network concatenated data-frame, and to convey the second-network concatenated data-frame to the central network for delivery to the first-interface-address, and wherein the first interface is adapted to receive the second-network concatenated data-frame at the first-interface-address, and to recover the second-network initial data-frame from the second-network concatenated data-frame and to convey the recovered second-network data-frame to the first network for delivery to the first-network-destination address.

Preferably the apparatus includes a central processing unit (CPU) which is coupled to the first interface and which is adapted to control the first interface.

Further preferably, the CPU is adapted to generate the look-up table in the memory.

Preferably, the first interface is adapted to set a length of each of the plurality of sub-frames to be no greater than a predetermined maximum transmit unit length of one of the networks.

Preferably, the protocol different from the Fibre Channel protocol comprises an Ethernet protocol.

Preferably, the memory comprises a content addressable memory.

There is further provided, according to a preferred embodiment of the present invention, a method for transferring data between first and second networks via a central network therebetween, including:
coupling a first interface between the first network, which operates according to a Fibre Channel protocol, and the central network, which operates according to a protocol different from the Fibre Channel protocol, the first interface including a memory containing a look-up table that includes a second-network-destination-address;
receiving an initial data-frame including the second-network-destination-address from a client on the first network at the first interface;
deriving from the look-up table a second-interface-address using the second-network-destination-address as an index to the look-up table;
concatenating the second-interface-address to the initial data-frame;
converting the concatenated data-frame to a plurality of sub-frames responsive to a length of the concatenated data-frame, each sub-frame comprising a respective counter;
conveying the plurality of sub-frames to the central network for delivery to the second-interface-address;
receiving the plurality of sub-frames at the second-interface-address of a second interface coupled between the central network and a second network operating according to the Fibre Channel protocol;
conveying a respective acknowledgment of receipt of each of the plurality of sub-frames to the first interface;
resending one or more of the plurality of sub-frames from the first interface responsive to the first interface not receiving one or more of the respective acknowledgments of receipt;
checking if a resent sub-frame has already been received at the second interface;
ignoring the resent sub-frame responsive to the check;
recovering the concatenated data-frame from the plurality of sub-frames in the second interface responsive to the respective counters;
generating a recovered initial data-frame from the concatenated data-frame; and
conveying the recovered initial data-frame to the second network for delivery to the second-network-destination address.

Preferably, the method includes:
receiving a second-network initial data-frame including a first-network-destination-address from a second-network client on the second network at the second interface;
deriving from a second-interface look-up table comprised in a second-interface memory in the second interface a first-interface-address using the first-network-destination-address as an index to the second-interface look-up table;
concatenating the first-interface-address to the second-network initial data-frame;
conveying the concatenated second-network data-frame to the central network for delivery to the first-interface-address;
receiving the concatenated second-network data-frame at the first interface responsive to the first-interface-address;
recovering the second-network initial data-frame in the first interface; and
conveying the recovered second-network initial data-frame to the first network for delivery to the first-network-destination address.

Preferably, the method includes coupling to the first interface a central processing unit (CPU) which is adapted to control the first interface.

Further preferably, the method includes generating the look-up table in the CPU.

Preferably, converting the concatenated data-frame to a plurality of sub-frames includes setting a length of each of the plurality of data-frames to be no greater than a predetermined maximum transmit unit length of one of the networks.

Preferably, the memory comprises a content addressable memory.

The present invention will be more fully understood from the following detailed description of the preferred embodiments thereof, taken together with the drawings, in which:

### BRIEF DESCRIPTION OF THE DRAWINGS

Fig. 1 is a schematic block diagram of a wide area network (WAN) coupled to a plurality of Fibre Channel (FC) networks, according to a preferred embodiment of the present invention;

Fig. 2 is a flowchart of a process for transferring a data-frame which does not require an acknowledgment between a first client in a first FC network and a second client in a second FC network, according to preferred embodiments of the present invention;

Fig. 3 is a schematic diagram of structures of the data-frame during the transfer process of Fig. 2, according to preferred embodiments of the present invention;

Fig. 4A is a flowchart showing a process for transferring FC data which is to be acknowledged from a first client in a first FC network to a second client in a FC second network, according to a preferred embodiment of the present invention; and

Fig. 4B is a timing diagram for the process of Fig. 4B, according to a preferred embodiment of the present invention.

### DETAILED DESCRIPTION OF PREFERRED EMBODIMENTS

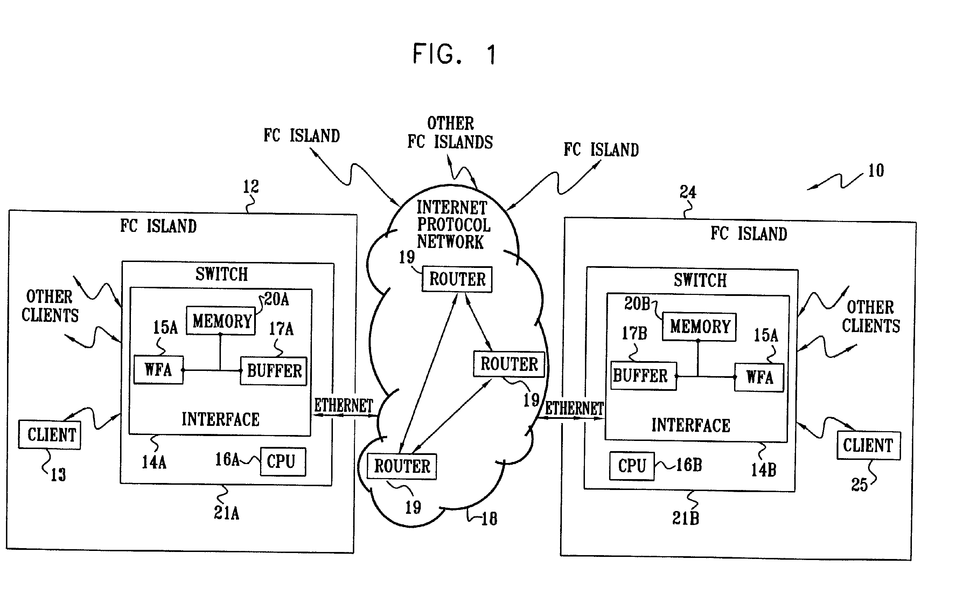

Reference is now made to Fig. 1, which is a schematic block diagram of a coupled network system 10, according to a preferred embodiment of the present invention. System 10 comprises a plurality of separated networks each having at least one end-user client. Clients of the separated networks communicate with each other via their respective networks and a central wide area network (WAN) 18. Each of the plurality of separated networks, herein by way of example assumed to be a first network 12 comprising a first end-user client 13 and a second network 24 comprising a second end-user client 25, preferably operates according to a Fibre Channel (FC) protocol, and is able to operate substantially independently of the other separated networks. Networks 12 and 24 are also termed herein "FC islands" or "islands." WAN 18 comprises one or more routers 19 which are used for transferring data within network 18. WAN 18 is able to transfer data in an Internet Protocol (IP) format within the WAN, and operates according to any industry-standard data transfer protocol such as an Ethernet protocol. WAN 18 is able to receive and transmit data formed according to an Ethernet protocol, and most preferably, the Ethernet protocol is a gigabit Ethernet (GBE) protocol supporting data transmission at a rate of at least 1 gigabit/s (Gbps). Further most preferably, the FC protocol also supports data transmission at a rate of at least 1 Gbps.

FC island 12 is coupled to WAN 18 by a dedicated interface 14A. A suitable interface is the GFS-8 interface produced by SanCastle Technologies Ltd., Yokneam, Israel. Interface 14A comprises a memory 20A comprising a look-up table, a wait for acknowledge (WFA) memory 15A, and a buffer memory 17A. In some preferred embodiments of the present invention, memory 20A comprises a content addressable memory (CAM), such as a MUAA co-processor produced by Music Semiconductors of Eygelshoven, The Netherlands. Interface 14A is most preferably installed in a switch 21A, which couples client 13 to other clients of island 12 and which is controlled by a central processing unit (CPU) 16A, preferably an Intel 960 produced by Intel Corporation, of Santa Clara, California. CPU 16A also controls at least some of the operations of memory 20A, WFA 15A, and buffer 17A, whose functions are explained hereinbelow. FC island 24 is coupled to WAN 18 by a dedicated interface 14B, which is substantially similar in implementation and operation to interface 14B, comprising a look-up memory 20B, a WFA memory 15B, and a buffer memory 17B. Interface 14B is most preferably installed in a switch 21B, which is substantially similar in implementation and operation to switch 21A, and which couples client 25 to other clients of island 24. A CPU 16B controls the operation of switch 21B and also controls at least some of the operations of memory 20B, WFA 15B, and buffer 17B. Interfaces 14A and 14B are also referred to hereinbelow as interface 14, and switches 21A and 21B are also referred to hereinbelow as switch 21. Similarly, corresponding components of the interfaces and switches are also referred to hereinbelow without suffixes A or B.

A detailed description of the implementation of an interface substantially similar in operation to interface 14 is provided in U.S. Patent Application 09/712,616, , which is assigned to the assignee of the present invention and which is incorporated herein by reference. Patent Application 09/712,616 also provides a description of the operation of a switch substantially similar in operation to switch 21.

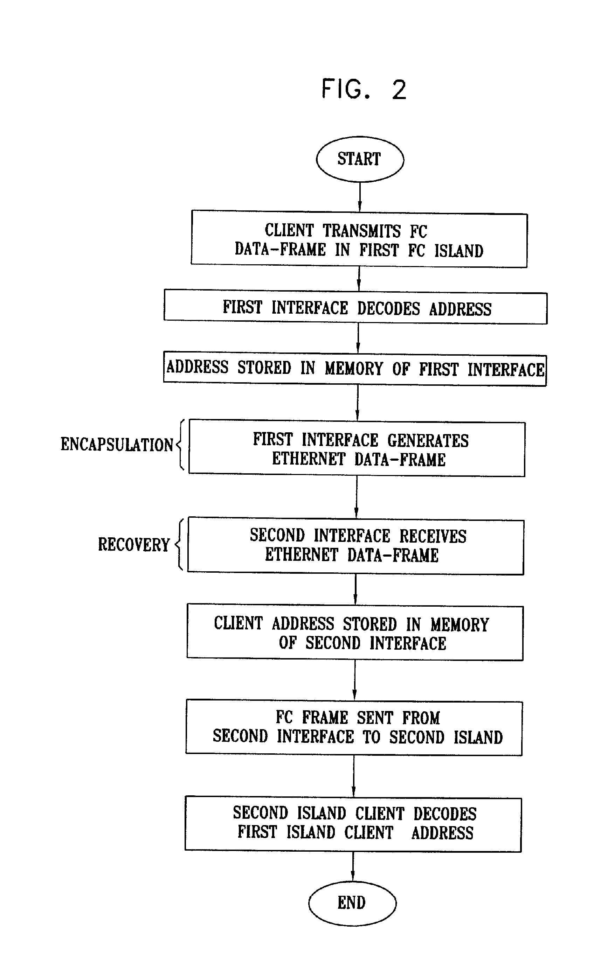

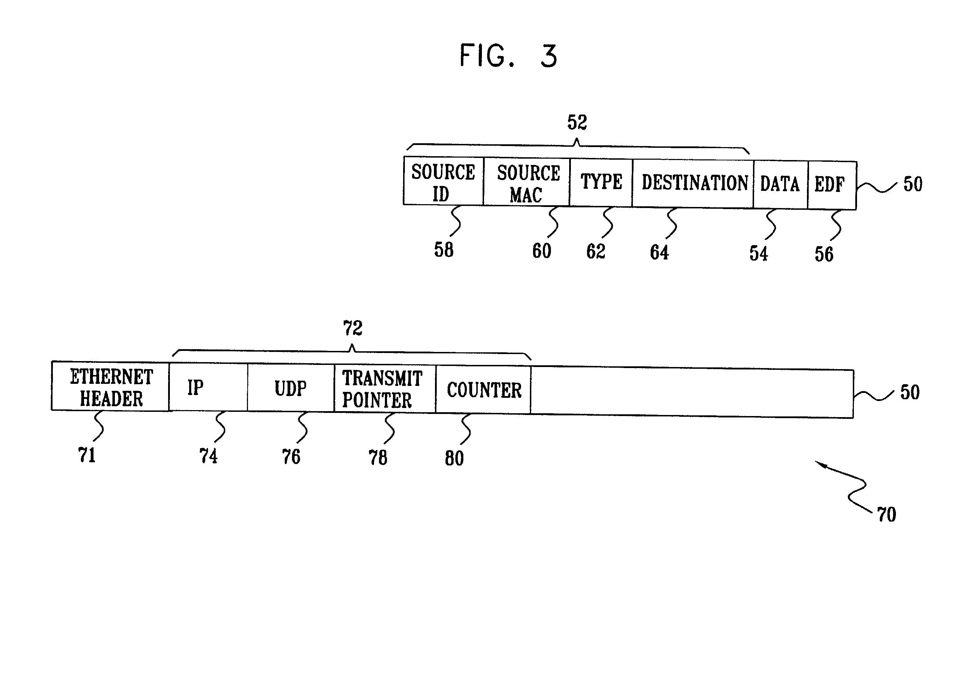

Fig. 2 is a flowchart of a process for transferring a data-frame which does not require an acknowledgment between client 13 and client 25, and Fig. 3 is a schematic diagram of structures of the data-frame during transfer, according to preferred embodiments of the present invention. The flowchart of Fig. 2 applies to a data-frame which is transmitted from client 13, typically to announce an initial presence of the client in FC island 12. It will be understood that the process described with reference to Fig. 2 substantially applies to other data-frames which do not require acknowledgment. Such data-frames include network control or management data-frames, or data-frames announcing the continuing presence of a network client, which are not directed data-frames from one client of system 10 to another client of the system.

Initially client 13 generates an FC data-frame 50 (Fig. 3) according to an FC standard protocol, preferably according to a routing level Internet Protocol (IP). Alternatively, data-frame 50 is generated according to another routing level protocol. Data-frame 50 comprises a header section 52, a data payload section 54, and an FC end-of-frame (EOF) section 56. Preferably, header section 52 comprises a source identity (ID) field 58 and a source media access control (MAC) address field 60 of client 13, as well as a type field 62 indicating that the data-frame is a data-frame which does not need to be acknowledged. Header section 52 also preferably comprises a destination field 64, described in more detail below, which is used to point to a specific client when data-frame 50 is used as a directed data-frame. Alternatively, data section 54 comprises some or all of the information in the ID, MAC, Type and destination fields. Clients in FC island 12, other than client 13, receive data-frame 50, and record values of ID field 58 and MAC field 60 by methods known in the art, for use in transmitting data-frames to client 13.

The data-frame from client 13 is also received by interface 14A, which decodes the source ID and MAC of the client, preferably using CPU 16A. The source ID and MAC are entered into a look-up table comprised in memory 20A, and routing information to client 13 is also entered into the look-up table. It will be appreciated that the routing information indicates that client 13 is comprised in FC island 12.

Interface 14A then encapsulates data-frame 50 into an Ethernet/IP standard protocol format by adding an Ethernet header 71 and a data-transparent header 72 to data-frame 50, in order to generate an Ethernet/IP data-frame 70. Ethernet header 71 is most preferably a GBE header. Alternatively, header 71 is any other Ethernet protocol standard header. Data-transparent header 72 comprises an IP section 74 and a transport layer section 76. Most preferably, transport layer section 76 is implemented according to a User Datagram Protocol (UDP). Alternatively, section 76 is implemented according to another industry-standard protocol which supports IP data transmission, such as a Transport Control Protocol (TCP). It will be appreciated that using a UDP reduces the number of bytes needed to be generated in data-frame 70 compared to using a TCP. Header 72 also comprises an address of interface 14A and/or of switch 21A as a source address of Ethernet data-frame 70. Header 72 further comprises a transmit pointer field 78 and a counter field 80, whose functions are explained hereinbelow, and which are typically not utilized when data-frame 70 is a data-frame not requiring an acknowledgment.

Interface 14A conveys Ethernet/IP data-frame 70 to one or more routers 19 comprised in WAN 18, which broadcast the data-frame within the network, so that interface 14B in FC island 24 receives the data-frame. (Other interfaces between FC islands and central network 18 receive the data-frame, and act substantially as described herein with respect to Fig. 2.)

Interface 14B reads the address of interface 14A and/or of switch 21A from header 72, and enters the addresses as routing information for client 13 into a look-up table comprised in memory 20B. Interface 14B then regenerates FC frame 50 by stripping headers 71 and 72 from frame 70, reads the address of client 13 from the regenerated frame, and enters the address of client 13 into the look-up table.

In a final step, interface 14B transmits regenerated frame 50 to FC island 24, so that clients, such as client 25, comprised in island 24 are able to record values of ID field 58 and MAC field 60 of client 13. The recording is implemented in substantially the same manner as clients in island 12 record the values.

The process described hereinabove with respect to Fig. 2 is implemented for all clients in all FC islands coupled to WAN 18, so that each interface generates a look-up table comprising address information and corresponding routing information for each client in its respective look-up memory. The process also supplies each client with respective addresses of all other clients in system 10.

Those skilled in the art will appreciate that other methods for generating look-up tables in the look-up memories of each interface, comprising routing information substantially similar to that described above, may be implemented in system 10. For example, a CPU of a specific switch may transfer data comprised in the look-up table of a first interface to the look-up memory of a second interface, via WAN 18. The transferred data is then incorporated in the look-up table of the second interface's look-up memory.

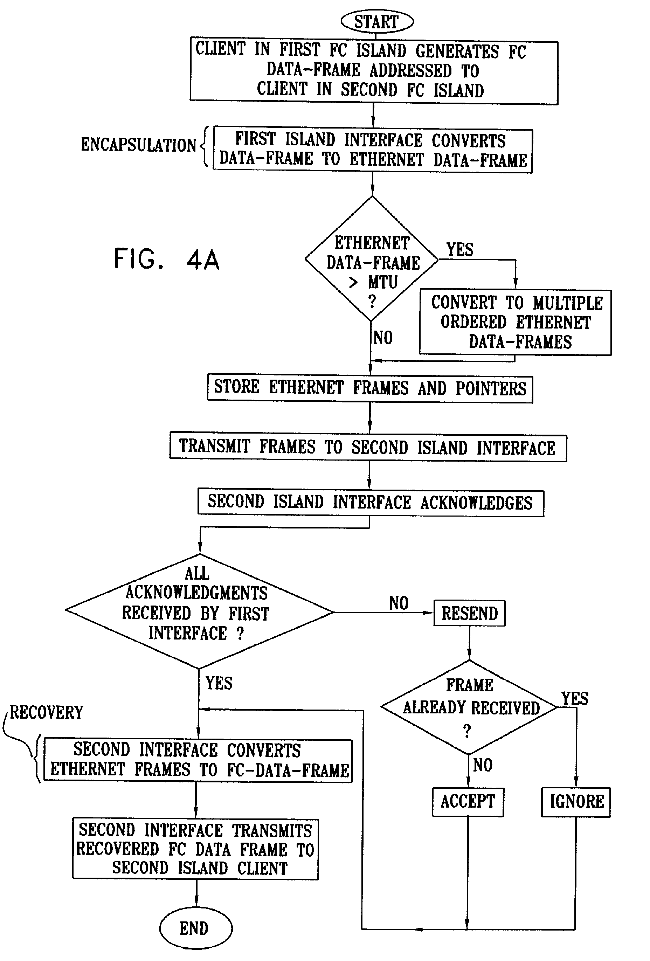

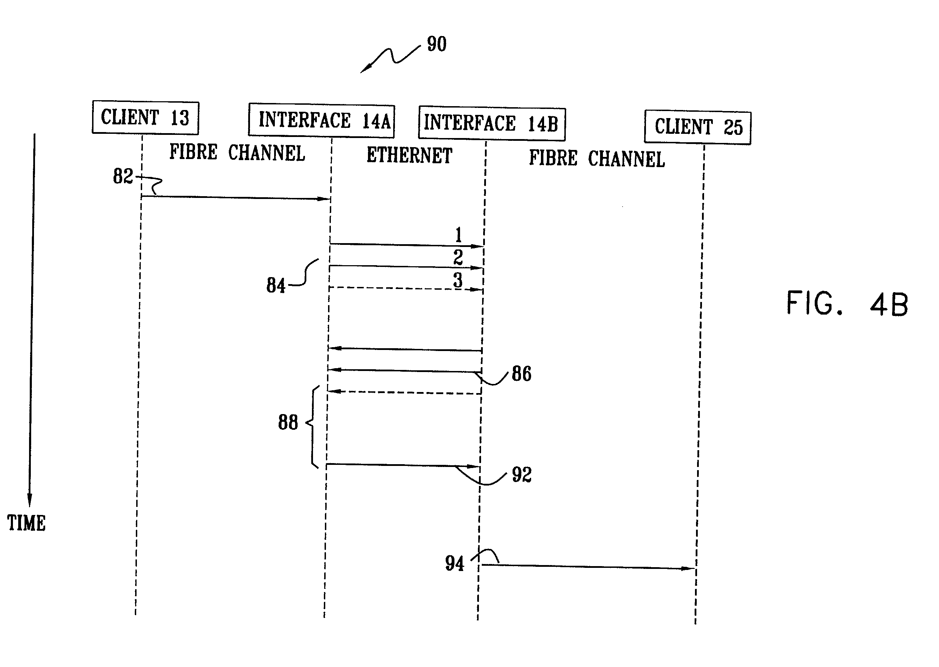

The process described with respect to Fig. 2 typically applies for FC data-frames which are considerably smaller in length than the maximum 2112 bytes allowed by the FC protocol, since the data-frames have little or no data payload. Similarly, the Ethernet/IP data-frames generated are also considerably smaller than the maximum 1500 bytes allowed by the Ethernet protocol. In WAN 18, one or more routers 19 may only be able to accept data-frames having a shorter length than the maximum allowed by the Ethernet protocol. For example, some routers known in the art accept data-frames up to a maximum length of 572 bytes. The maximum transmit unit (MTU) of a path of a network is defined as the smallest data-frame length acceptable by all active components of the path chosen for transmission. Typically, Ethernet/IP frames generated for data-frames which do not require an acknowledgment are significantly shorter than any MTU of the network. However, in some circumstances such frames may exceed a specific MTU. A process described hereinbelow with reference to Fig. 4A and Fig. 4B can be adapted by those skilled in the art for cases where the Ethernet/IP frames generated in the process of Fig. 2 are larger than an MTU of the network.

Fig. 4A is a flowchart showing a process for transferring FC data from client 13 (Fig. 1) in first FC island 12 to client 25 in second FC island 24, and Fig. 4B is a timing diagram 90 for the process, according to a preferred embodiment of the present invention. The process described herein is implemented after look-up tables have been generated in memory 20A and memory 20B, and after client 13 has been supplied with the address of client 25, preferably as described above with reference to Fig. 2. Client 13 generates an FC data-frame according to any protocol acceptable to clients within FC island 12. The FC data-frame is substantially similar in form to data-frame 50 (Fig. 2), including the address of client 25 in destination field 64 of the FC header, and comprises data to be transferred from client 13 to client 25 in data field 54. Client 13 then transmits the FC data-frame at a time 82 into FC network 12, wherein interface 14A receives the FC data-frame.

Interface 14A uses the look-up table of memory 20A to determine routing information for the FC data-frame, and is thereby provided with the address of interface 14B, by using the address of client 25 as an index to the look-up table. Interface 14A encapsulates the FC data-frame to an Ethernet/IP data-frame substantially similar in form to data-frame 70, incorporating the address of interface 14B into transmit pointer field 78 comprised in header 72.

Interface 14A determines if the length of the Ethernet/IP data-frame is greater than the MTU of a transmission path in WAN 18 selected by the interface, prior to transmitting the Ethernet/IP data-frame, by methods known in the art. If the length is greater than the MTU, interface 14A converts the data-frame into a plurality of ordered Ethernet/IP sub-frames, each having a length less than the MTU. The sub-frames are substantially similar in form to data-frame 70, and comprise the order of each sub-frame in a counter field 80 of header 72. Interface 14A stores a copy of the Ethernet/IP data-frame or sub-frames in buffer 17A, and one or more pointers, as needed, to the data-frame or sub-frames in WFA memory 15A. At a time 84 interface 14A then transmits the Ethernet/IP data-frame or sub-frames to interface 14B.

Preferably, at times 86 interface 14B receives the frames sent by interface 14A, and returns an acknowledgment for each frame received to interface 14A, which thereupon clears buffer 17A and WFA memory 15A. Alternatively, one or more acknowledgments, not necessarily in a one-one correspondence for the frames sent, are returned after time 84. For example, one acknowledgment may be utilized to acknowledge a plurality of sub-frames. If interface 14A has not received an acknowledgment for one or more specific frames by a predetermined time interval 88, the interface utilizes the pointers stored in WFA 15A and the respective frame copies in buffer 17A to resend the one or more unacknowledged frames at a time 92. The process of waiting for an acknowledgment and repeating the resending of unacknowledged frames continues for a predetermined number, preferably four, of resends for each unacknowledged frame.

Interface 14B compares counter fields 80 of received frames to check if a resent frame has already been received (as may happen if the frame has been received by interface 14B but the acknowledgment has not been received by interface 14A). The resent frame is ignored if it has already been received, and is accepted by interface 14B if it has not been previously received.

Interface 14B converts the Ethernet/IP data-frame or sub-frames, using counter field 80 in the latter case to correctly order the sub-frames, to an FC data-frame corresponding to the FC data-frame transmitted by client 13. Interface 14B then transmits the FC data-frame to client 25 at a time 94.

In some preferred embodiments of the present invention, interface 14A acting together with its CPU 16A is implemented to be able to select a particular route for transmission of data from FC island 12 to a client in another FC island. For example, interface 14A may select one or more specific routers 19 in WAN 18 to enable more secure transmission, and/or to enable speedier transmission, and/or to enable use of a larger frame or sub-frame size. The selection is implemented by incorporating routing information to the selected routers in Ethernet header 71 and/or data-transparent header 72, by methods known in the art.

It will be appreciated that the preferred embodiments described above are cited by way of example, and that the present invention is not limited to what has been particularly shown and described hereinabove. Rather, the scope of the present invention includes both combinations and subcombinations of the various features described hereinabove, as well as variations and modifications thereof which would occur to persons skilled in the art upon reading the foregoing description and which are not disclosed in the prior art.

## Claims

1. Apparatus for transferring data between first and second networks (12, 24) via a central network (18) therebetween, comprising:
a first interface (14A) coupled between the first network, which operates according to a Fibre Channel protocol, and the central network, which operates according to a protocol different from the Fibre Channel protocol, the first interface comprising a memory (20A) containing a look-up table that includes a second-network-destination-address, and being adapted to receive from a client (13) on the first network an initial data-frame comprising the second-network-destination-address, and to derive a second-interface-address from the look-up table using the second-network-destination-address as an index to the table, and to concatenate the second-interface-address to the initial data-frame so as to form a concatenated data-frame, and to convert the concatenated data-frame to a plurality of sub-frames responsive to a length of the concatenated data-frame, each sub-frame comprising a respective counter, and to convey the plurality of sub-frames to the central network for delivery to the second-interface-address; and
a second interface (14B) coupled between the central network and the second network, which operates according to the Fibre Channel protocol, the second interface being adapted to receive the plurality of sub-frames at the second-interface-address, and to convey a respective acknowledgment of receipt of each of the plurality of sub-frames to the first interface, and to recover the initial data-frame from the plurality of sub-frames responsive to the respective counters, and to convey the recovered data-frame to the second network for delivery to the second-network-destination address;
wherein the first interface is adapted to resend one or more of the plurality of sub-frames to the second interface responsive to not receiving the acknowledgment of the respective sub-frame, and wherein the second interface is adapted to check if a resent sub-frame has already been received therein, and responsive thereto, to ignore the resent sub-frame.

2. Apparatus according to claim 1, wherein the second interface comprises a second-interface memory (20B) containing a second-interface look-up table that includes a first-network-destination-address, the second interface being adapted to receive from a second-network client (25) on the second network a second-network initial data-frame comprising the first-network-destination-address, and to derive a first-interface-address from the second-interface look-up table using the first-network-destination-address as an index to the second-interface look-up table, and to concatenate the first-interface-address to the second-network initial data-frame to form a second-network concatenated data-frame, and to convey the second-network concatenated data-frame to the central network for delivery to the first-interface-address, and
wherein the first interface is adapted to receive the second-network concatenated data-frame at the first-interface-address, and to recover the second-network initial data-frame from the second-network concatenated data-frame and to convey the recovered second-network data-frame to the first network for delivery to the first-network-destination address.

3. Apparatus according to claim 1 or claim 2, and comprising a central processing unit (CPU) (16A) which is coupled to the first interface and which is adapted to control the first interface.

4. Apparatus according to claim 3, wherein the CPU is adapted to generate the look-up table in the memory.

5. Apparatus according to any of claims 1 - 4, wherein the first interface is adapted to set a length of each of the plurality of sub-frames to be no greater than a predetermined maximum transmit unit length of one of the networks.

6. Apparatus according to any of claims 1 - 5, wherein the protocol different from the Fibre Channel protocol comprises an Ethernet protocol.

7. Apparatus according to claim 1, wherein the memory comprises a content addressable memory.

8. A method for transferring data between first and second networks (12, 24) via a central network (18) therebetween, comprising:
coupling a first interface (14A) between the first network, which operates according to a Fibre Channel protocol, and the central network, which operates according to a protocol different from the Fibre Channel protocol, the first interface comprising a memory (20A) containing a look-up table that includes a second-network-destination-address;
receiving an initial data-frame comprising the second-network-destination-address from a client (13) on the first network at the first interface;
deriving from the look-up table a second-interface-address using the second-network-destination-address as an index to the look-up table;
concatenating the second-interface-address to the initial data-frame;
converting the concatenated data-frame to a plurality of sub-frames responsive to a length of the concatenated data-frame, each sub-frame comprising a respective counter;
conveying the plurality of sub-frames to the central network for delivery to the second-interface-address;
receiving the plurality of sub-frames at the second-interface-address of a second interface (14B) coupled between the central network and a second network operating according to the Fibre Channel protocol;
conveying a respective acknowledgment of receipt of each of the plurality of sub-frames to the first interface;
resending one or more of the plurality of sub-frames from the first interface responsive to the first interface not receiving one or more of the respective acknowledgments of receipt;
checking if a resent sub-frame has already been received at the second interface;
ignoring the resent sub-frame responsive to the check;
recovering the concatenated data-frame from the plurality of sub-frames in the second interface responsive to the respective counters;
generating a recovered initial data-frame from the concatenated data-frame; and
conveying the recovered initial data-frame to the second network for delivery to the second-network-destination address.

9. A method according to claim 8, and comprising:
receiving a second-network initial data-frame comprising a first-network-destination-address from a second-network client (25) on the second network at the second interface;
deriving from a second-interface look-up table comprised in a second-interface memory (20B) in the second interface a first-interface-address using the first-network-destination-address as an index to the second-interface look-up table;
concatenating the first-interface-address to the second-network initial data-frame;
conveying the concatenated second-network data-frame to the central network for delivery to the first-interface-address;
receiving the concatenated second-network data-frame at the first interface responsive to the first-interface-address;
recovering the second-network initial data-frame in the first interface; and
conveying the recovered second-network initial data-frame to the first network for delivery to the first-network-destination address.

10. A method according to claim 8 or claim 9, and comprising coupling to the first interface a central processing unit (CPU) (16A) which is adapted to control the first interface.

11. A method according to any of claims 8 - 10, and comprising generating the look-up table in the CPU.

12. A method according to any of claims 8 - 11, wherein converting the concatenated data-frame to a plurality of sub-frames comprises setting a length of each of the plurality of data-frames to be no greater than a predetermined maximum transmit unit length of one of the networks.

13. A method according to any of claims 8 - 12, wherein the memory comprises a content addressable memory.
